(19) Europäisches Patentamt

European Patent Office

Office européen des brevets

(11) **EP 1 341 355 A2**

(12) **EUROPEAN PATENT APPLICATION**

(43) Date of publication:
**03.09.2003 Bulletin 2003/36**

(51) Int Cl.⁷: **H04L 27/01**, H04B 1/10

(21) Application number: **03004311.1**

(22) Date of filing: **27.02.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **01.03.2002 JP 2002055917**

(71) Applicant: **SHARP KABUSHIKI KAISHA Osaka-shi, Osaka-fu 545-0013 (JP)**

(72) Inventor: **Amano, Yoshihisa Nara-shi, Nara-ken (JP)**

(74) Representative: **Müller - Hoffmann & Partner Patentanwälte, Innere Wiener Strasse 17 81667 München (DE)**

(54) **Phase noise elimination for high-frequency communication**

(57)     In this phase noise elimination circuit, an inputted high-frequency signal is branched into two high-frequency signals by a power distribution part 3, and one high-frequency signal out of the two branched high-frequency signals is passed through an acoustic wave delay part 5 so as to be delayed by a specified time as compared to the other high-frequency signal. Then, the one high-frequency signal delayed by a specified time as compared to the other high-frequency signal and the other high-frequency signal are adjusted by phase amplitude adjustment parts 6, 7 so as to become generally equal in amplitude and phase of their respective non-noise signal components to each other in a power combining part 6. As a result, in the power combining part 6, signal components of the two high-frequency signals intensify each other in power because of their equality in phase and amplitude, while noise components of the two high-frequency signals weaken each other in power because of their unequalness in phase. This phase noise elimination circuit is capable of eliminating phase noise with small-scale, low-cost, and easy-to-mass-produce electrical circuits.

*Fig.1*

**Description**

BACKGROUND OF THE INVENTION

The present invention relates to a phase noise elimination circuit, a phase noise elimination apparatus and a high-frequency communication system which operate for phase modulated signals, in particular, QPSK (Quadri Phase Shift Keying) or other digital phase modulated signals to eliminate or reduce phase noise mixed from an oscillator.

In recent years, there have been rapidly increasing systems using QPSK or other phase modulation systems as a signal modulation system in digital radio-communication equipment typified by cellular phones. The phase modulation system is a known technique, as described in detail in many books or literature such as "Digital Mobile Communications," published by Tokyo Electrical Engineering College Publications.

Here is given a description for clarifying the "role that an oscillator fulfills in a phase-modulation type communication system."

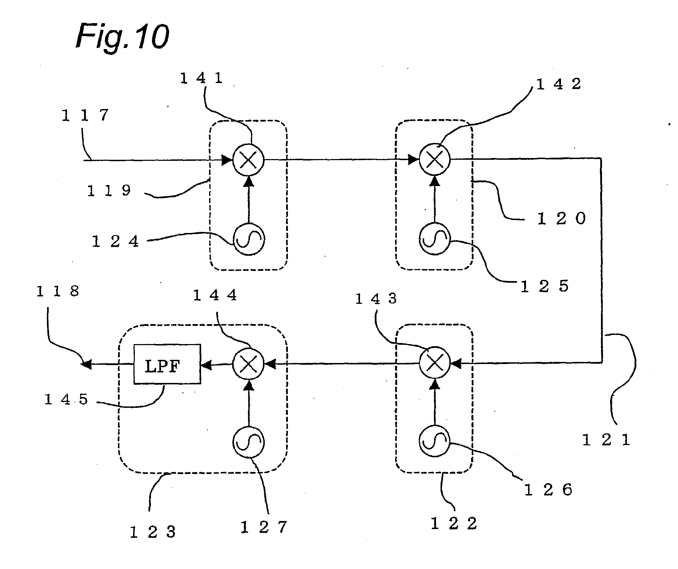

Fig. 10 schematically shows a circuit of a communication system using the BPSK (Binary Phase Shift Keying) system that is the simplest among phase modulation systems. For simplicity's sake, this communication system of Fig. 10 incorporates a reception system implemented by a synchronous detection system which is simple in circuit construction.

In Fig. 10, upper-stage part represents a transmission system, and lower-stage part represents a receiver system. Referring to Fig. 10, reference numeral 117 denotes an input port for digital signals of the baseband, 118 denotes an output port. Also, 119 denotes a modulation part, and 120 denotes an up-convert part. Further, 121 denotes a communication path, and this communication path 121 is implemented by a cable or the like for wire communications and by an antenna and a radio path for radio communications. Also, numeral 122 denotes a down-convert part and 123 denotes a demodulation part.

The modulation part 119 has an oscillator 124 and a mixer 141, and the up-convert part 120 has an oscillator 125 and a mixer 142. Also, the down-convert part 122 has an oscillator 126 and a mixer 143, and the demodulation part 123 has an oscillator 127, a mixer 144 and a low-pass filter 145.

In the modulation part 119, an output of the oscillator 124, which is relatively low in frequency, and a digital signal of the baseband are multiplied together by the mixer 141, by which a BPSK phase modulated signal is generated. In the up-convert part 120, a phase modulated signal, which is taken over from the preceding stage, and an output of the oscillator 125, which is relatively high in frequency, are multiplied together by the mixer 142, by which the phase modulated signal is frequency-converted into a higher frequency band. Next, the phase modulated signal that has passed through the communication path 121 is subjected in the down-convert part 122 to a conversion inverse to the conversion in the up-convert part 120. Further, the signal derived from the up-convert part 120 is subject in the next demodulation part 123 to a conversion inverse to the conversion in the modulation part 119.

This phase-modulation type communication system shown in Fig. 10 is a system that depends largely on the quality of the oscillators 124, 125, 126, 127. In this communication system, oscillators are used for not only frequency conversion of signals but also modulation and demodulation of signals.

Indeed there are many types of phase-modulation type communication systems are available in addition to the synchronous-detection BPSK type communication system shown in Fig. 10, but the tendency of dependence on oscillators is common in general. Accordingly, the phase modulation system, in which phase bears information, is a system sensitive particularly to phase noise of oscillators.

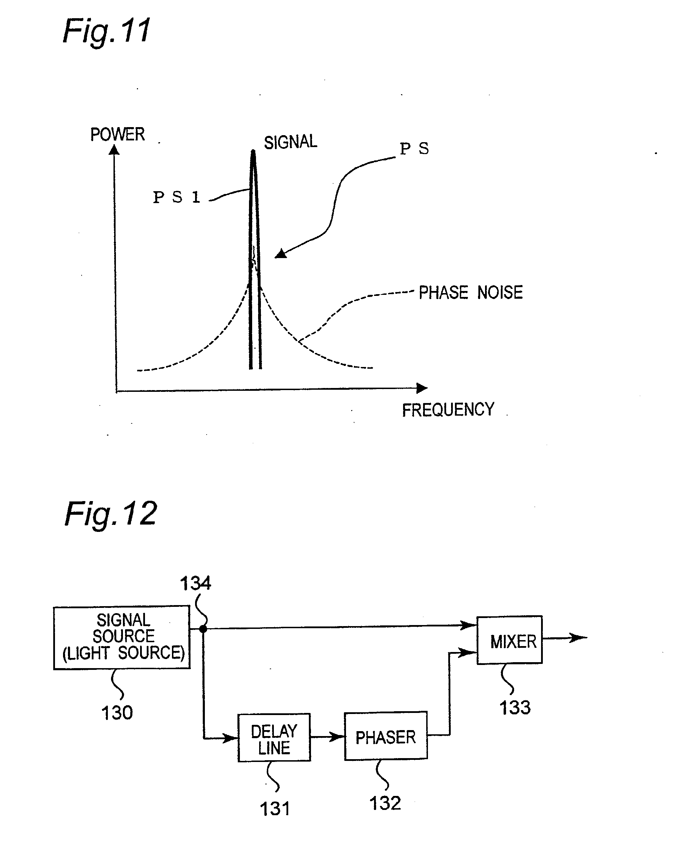

As shown in Fig. 11, which is a schematic spectral view, phase noise of an oscillator refers to one of impure noise components PS0 contained in an output spectrum PS of the oscillator which should inherently be a pure sine wave PS1. More strictly, the noise component is further decomposed into amplitude component and phase component, and this phase component is referred to as phase noise.

In the phase-modulation type communication system shown in Fig. 10, in all of the four oscillators 124 to 127, there is a fear that phase noise might be mixed into the phase modulated signal.

Generally, it is often the case that only the phase noise of the oscillators 125 and 126 in the up-convert part 120 and the down-convert part 122 are perceived as problems. This is because the oscillator generally has a characteristic that the higher the oscillating frequency is, the more the phase noise increases, and oscillating frequencies of the oscillators 125 and 126 in the convert parts 120 and 122 are often set much higher than oscillating frequencies of the two oscillators 124 and 127.

Definition, mechanism of generation, properties and the like of this phase noise are described in literature, for example, in Chapter 5 of "Monolithic Microwave Integrated Circuits (MMICs)" (1st edit.) by IEICE (the Institute of Electronics, Information and Communication Engineers of Japan). However, the following description is continued from the standpoint that "phase noise is neighborhood noise" for simplified explanation of only the gist.

As indicated by broken line in Fig. 11, the phase noise PS0 has a spectrum continuously spreading on the axis of frequency. However, in most communication systems, only the phase noise of immediate neighborhood of the sine-wave component inherent in the oscillator largely affects the communication quality, in particular. For instance, phase noise of a frequency band offset (shifted) from an oscillating frequency of 1 GHz by 10 kHz to 1 MHz largely affects the communication quality. Therefore, for expression of phase noise of the oscillator, logarithmic graphs are generally used. Furthermore, for noise residing in extreme neighborhoods (10 kHz to 1 MHz offset) of a desired signal (1 GHz) as shown above, it is impossible to adopt such a simple method as eliminating only noise, for example, by a band-pass filter. This is the essence of the difficulty in measures against phase noise.

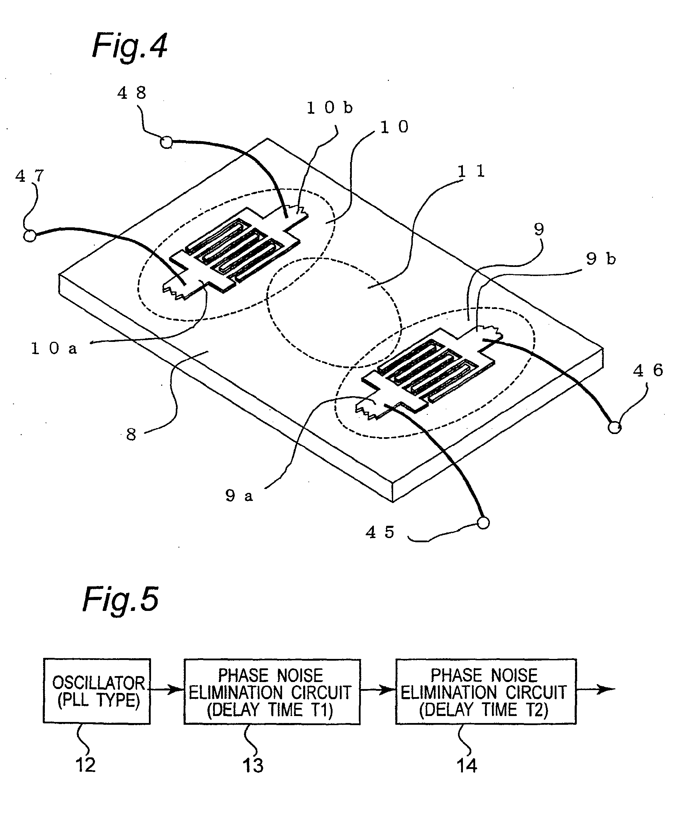

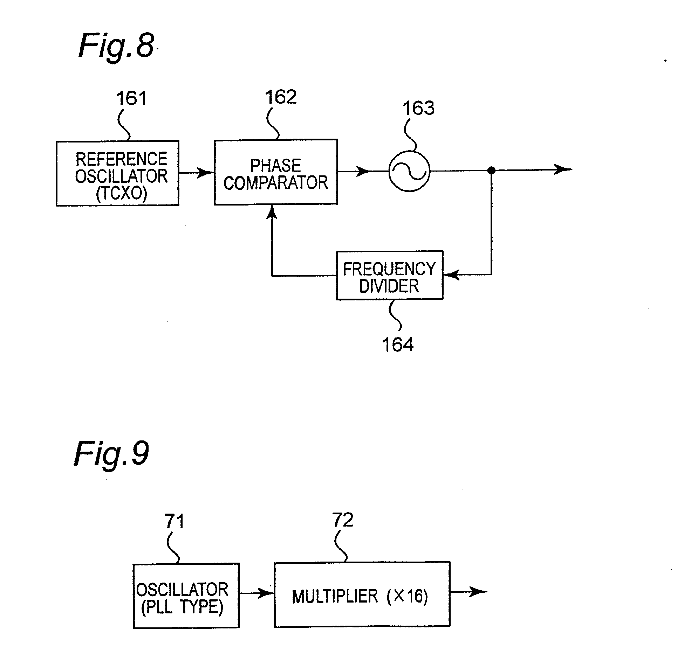

Among several methods that are known as those for eliminating such phase noise, a typical one is to use a PLL (phase lock loop) circuit. As one of the PLL circuits, a sampling-type PLL circuit is shown in Fig. 8. It is noted that this Fig. 8 is a diagram similar to Fig. 5.10 (b) in the above-mentioned literature, "Monolithic Microwave Integrated Circuits (MMICs)."

In this sampling-type PLL circuit, the phase of an oscillator 163 is compared to the phase of a high-stability reference oscillator 161 by a phase comparator 162. Through this phase comparison, the phase of the oscillator 163 is corrected and stabilized. The oscillator 163 is a VCO (Voltage Controlled Oscillator), and the reference oscillator 161 is a TCXO (Temperature Compensated Crystal Oscillator) or the like.

Such a PLL circuit is a widely known technique and described in detail in Chapter 5 of the above-mentioned "Monolithic Microwave Integrated Circuits (MMICs)." Therefore, here is not given a so detailed description of the circuit operation.

However, only with the prior art method of phase noise reduction using this PLL circuit, it has been becoming difficult to meet the demand of phase noise reduction that is going increasingly more strict year by year. This tendency is noticeable particularly in such extremely high frequency band as millimeter wave band. This is because, as described above, phase noise of an oscillator generally increases as the oscillating frequency becomes higher, which is a characteristic of the phase noise.

A concrete example shown in Fig. 9 has an oscillator 171 containing a built-in PLL circuit and showing good phase-noise reduction performance in microwave band (frequency: 3.75 GHz), where a 16-fold multiplier 172 is connected to the oscillator 171, for use in millimeter wave band (frequency: 60 GHz).

However, with a 16-fold increase of frequency by the connection of the 16-fold multiplier 172 like this, it is known that phase noise as well would theoretically be worsened by $20 \text{Log}_{10} 16 = 24$ dBc at the same time. Therefore, the PLL circuit alone contained in the oscillator 171 would result in insufficient performance for such a phase-noise deterioration of the whole system shown in Fig. 9.

Meanwhile, in fields other than electrical circuits, there have been known methods of phase noise elimination other than the use of PLL circuits. An example is the technique in the field of optical communications, and a method disclosed in Japanese Patent Laid-Open Publication HEI 5-327415 is described with reference to Fig. 12. In this noise elimination method, a signal issued from a signal source (light source) 130 is branched into two at a branch point 134, and one signal alone is passed through a delay line 131 and a phaser 132. This one signal is combined with the other signal in a mixer 133. In this combination by the mixer 133, inherent sine waves in the two signals accord together in phase to intensify each other, while their phase noise components are shifted from each other by an effect of the delay line 131 to cancel each other. It is noted that a detailed description of principle of this technique is disclosed in the above-mentioned literature.

However, the noise elimination technique explained in this Fig. 12 is a technique in the field of optical communications, and cannot be implemented in electrical circuits as it is. This is because in the prior art technique of Fig. 12, optical fibers extending as long as several hundreds meters to several kilometers are used as the delay line 131. Although optical fibers small in loss and thin in diameter could implement such a constitution, yet it can be said impractical to connect together coaxial cables for electric signals large in loss and thick in diameter over lengths of several hundreds meters to several kilometers from the viewpoints of loss and size.

SUMMARY OF THE INVENTION

Accordingly, an object of the present invention is to provide a phase noise elimination circuit, a phase noise elimination apparatus and a high-frequency communication system which can be implemented by small-size, low-cost, easy-to-mass-produce electrical circuits.

In order to achieve the above object, there is provided a phase noise elimination circuit comprising:

a branching part for branching an inputted high-frequency signal into two high-frequency signals;
a surface-acoustic-wave delay line or bulk-acoustic-wave delay line to which one high-frequency signal out of the two branched high-frequency signals is to be inputted;
a phase amplitude adjustment part for adjusting amplitude and phase of non-noise signal components contained in a high-frequency signal that has passed through the surface-acoustic-wave delay line or bulk-acoustic-wave delay line and amplitude and phase of non-noise signal components contained in the other high-frequency signal out of the two high-frequency signals so as to make their amplitudes and phases generally coincident with each other; and
a combining part for combining together two high-frequency signals outputted by the phase amplitude adjustment parts and containing non-noise signal components adjusted so that their amplitude and phase become generally equal to each other.

In this invention, the inputted high-frequency signal is branched into two high-frequency signals by the branching part, and one high-frequency signal out of the two branched high-frequency signals is passed through the surface-acoustic-wave delay line or bulk-acoustic-wave delay line. Thus, the high-frequency signal can be delayed by a specified time as compared to the other high-frequency signal.

Then, the one high-frequency signal delayed by a specified time as compared to the other high-frequency signal and the other high-frequency signal are adjusted by the phase amplitude adjustment part so as to become generally equal in amplitude and phase of their respective non-noise signal components to each other. As a result, while the two high-frequency signals are adjusted so as to become generally equal to each other in amplitude and phase of their non-noise signal components, the noise signal component of the one high-frequency signal is delayed by the specified time due to the delay line as compared to the noise signal component of the other high-frequency signal.

Then, the two high-frequency signals, which have been adjusted so as to be generally equal to each other in amplitude and phase of their non-noise signal components and which have been shifted from each other in amplitude and phase of their noise signal components by the specified time as shown above, are combined together by the combining part. As a result, the in-phase two non-noise signals out of the two high-frequency signals intensify each other, while the phase-shifted two noise signals out of the two high-frequency signals cancel each other.

In this invention, one high-frequency signal is passed through the surface-acoustic-wave delay line or bulk-acoustic-wave delay line, so that its non-noise signal component and noise signal component are shifted in phase from each other. Moreover, the other high-frequency signal -is not passed through the surface-acoustic-wave delay line or the bulk-acoustic-wave delay line, so that the noise signal component of the other high-frequency signal is shifted in phase from the noise signal component of the one high-frequency signal.

In the phase noise elimination circuit of this invention, a delay line has been implemented by an electrical circuit which is small in scale, low in cost and easy to mass produce by using as an acoustic wave delay line, i.e., a SAW (surface acoustic wave) delay line or a BAW (bulk acoustic wave) delay line.

The acoustic wave delay line is a known technique disclosed in much literature such as "A Handbook for Acoustic Wave Device Technique," edited by No. 150 Committee for Acoustic Wave Device Technique, the Japan Society for the Promotion of Science (Ohmsha), and a device for once converting an electric signal into an ultrasonic wave signal, subjecting the signal to a propagation delay, and then returning the signal again to the electric signal. The propagation velocity of an electric signal on an electronic circuit board is generally about several tens percent of the velocity of light ($3 \times 10^8$ m/sec.).

In contrast to this, the propagation velocity of ultrasonic waves on a piezoelectric board is generally on the order of several hundreds to several thousands (m/sec.), slower than that of electric signals by an order of $10^{-5}$. That is, given an equal device size, devices of ultrasonic propagation can achieve delay times larger than those of devices of electric signal propagation by an order of $10^5$. As a result of this, the size of delay lines implemented by electrical circuits can be reduced.

Also, acoustic-wave type delay lines generally involve smaller amounts of occurrence of insertion loss, than coaxial-line type delay lines, to achieve the same delay time. Therefore, the loss of delay lines implemented by electrical circuits can be reduced. Furthermore, acoustic wave delay lines, in particular, SAW (surface acoustic wave) delay line are devices which are mass produced by manufacturing processes similar to those of semiconductor integrated circuits (ICs), thus good in mass productivity.

Also, there is provided a phase noise elimination apparatus having a plurality of the above phase noise elimination circuits, wherein the plurality of phase noise elimination circuits are connected in a plurality of stages.

In the phase noise elimination apparatus, since the phase noise elimination circuit is connected in a plurality of stages, phase noise can be reduced to an extent beyond the limit of the prior art by multiplier effects of this plurality of stages of phase noise elimination circuits.

In one embodiment of the present invention, the phase noise elimination circuits of the individual stages have different values of delay time of the surface-acoustic-wave delay line or bulk-acoustic-wave delay line.

In the phase noise elimination apparatus of this embodiment, since the phase noise elimination circuits of the individual stages have different values of delay time of the surface-acoustic-wave delay line or bulk-acoustic-wave delay line, frequencies of phase noise to be eliminated in the individual stages are made different from one another, so that the phase noise elimination effect can be obtained over a wider range of offset frequency.

Also, there is provided a high-frequency communication system equipped with a phase modulator or a phase demodulator, wherein

the above phase noise elimination circuit is connected between a reference oscillator of the phase modulator or the phase demodulator and a modulation-and-demodulation use mixer.

In this high-frequency communication system, the above-described phase noise elimination circuit (or the above-described phase noise elimination apparatus) is connected between a reference oscillator of the phase modulator or the phase demodulator and a modulation-and-demodulation use mixer. Therefore, by this phase noise elimination circuit or apparatus, phase noise can be eliminated from high-frequency signals outputted by the reference oscillator of the phase modulator or phase demodulator.

Also, there is provided a high-frequency communication system for mixing phase modulated signal with a local signal to fulfill frequency conversion of the phase modulated signal, wherein

the phase noise elimination circuit is connected between a local oscillator and a mixer.

In this high-frequency communication system, the above-described phase noise elimination circuit (or the above-described phase noise elimination apparatus) is connected between a local oscillator and a mixer. Therefore, by this phase noise elimination circuit or apparatus, phase noise can be eliminated from high-frequency signals outputted by the local oscillator.

BRIEF DESCRIPTION OF THE DRAWINGS

The present invention will become more fully understood from the detailed description given hereinbelow and the accompanying drawings which are given by way of illustration only, and thus are not limitative of the present invention, and wherein:

Fig. 1 is a block diagram showing the basic principle of a first embodiment of the phase noise elimination circuit according to the present invention;
Fig. 2 is a characteristic view showing results of measurement of phase noise elimination effects in the first embodiment;
Fig. 3A is a characteristic view showing results of simulation of phase noise elimination characteristics in an example of the first embodiment and Fig. 3B is a characteristic view showing results of simulation of phase noise elimination characteristics in another example of the first embodiment;
Fig. 4 is a schematic view of a SAW delay line forming an acoustic wave delay part of the first embodiment;
Fig. 5 is a block diagram showing the basic construction of a phase noise elimination apparatus which is a second embodiment of the invention;
Fig. 6 is a schematic circuit diagram of a phase modulated signal communication system which is a third embodiment of the invention;
Fig. 7 is a view showing a modification example which allows the phase noise elimination circuit of the first embodiment to be applied to a high-frequency communication system;
Fig. 8 is a schematic circuit diagram of a PLL circuit as a background art example;
Fig. 9 is a block diagram of an oscillation circuit which adopts the PLL circuit as a background art example and which is constructed so as to obtain a millimeter-wave output;

Fig. 10 is a schematic circuit diagram of a phase modulated signal communication system of a background art;
Fig. 11 is a schematic characteristic view representing frequency characteristics of phase noise; and
Fig. 12 is a block diagram representing the principle of a phase noise elimination circuit in the optical communication field of a background art.

DETAILED DESCRIPTION OF THE PREFERRED EMBODIMENTS

Hereinbelow, embodiments of the present invention are described in detail more concretely with reference to the accompanying drawings.

(First Embodiment)

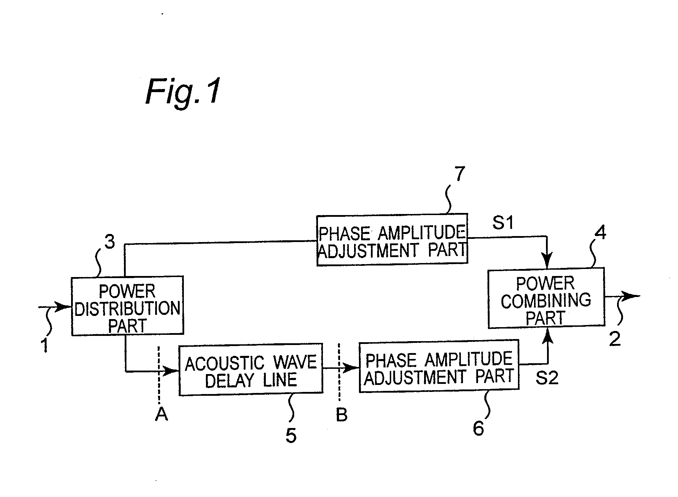

Fig. 1 shows the basic construction of a first embodiment of the phase noise elimination circuit according to the present invention. In this first embodiment, an electric power distribution part 3 is connected to an input port 1, while a phase amplitude adjustment part 7 and an acoustic wave delay part 5 are connected to the power distribution part 3. The acoustic wave delay part 5 is connected to a phase amplitude adjustment part 6, while the phase amplitude adjustment part 6 and the phase amplitude adjustment part 7 are connected to an electric power combining part 4. Then, the power combining part 4 is connected to an output port 2.

The power distribution part 3 and the power combining part 4 can easily be implemented by using, for example, a Wilkinson-type power divider or the like which is a known technique. Also, the acoustic wave delay part 5 is provided by an acoustic wave delay line. This acoustic wave delay line may be a SAW (Surface Acoustic Wave) delay line or a BAW (Bulk Acoustic Wave) delay line.

Fig. 4 schematically shows an example of the SAW delay line. In this SAW delay line, an input-side comb-type electrode pair 9 and an output-side comb-type electrode pair 10 are disposed on a piezoelectric substrate 8 formed by cutting a piezoelectric crystal material. These input-side comb-type electrode pair 9 and output-side comb-type electrode pair 10 are spaced from each other by a specified distance, where a region of the piezoelectric substrate 8 between the input-side comb-type electrode pair 9 and the output-side comb-type electrode pair 10 serves as a propagation path 11. It is noted that the comb-type electrode pairs 9 and 10 are implemented by pairs of combined comb-type electrodes 9a, 9b and 10a, 10b, respectively. The comb-type electrode pairs 9 and 10 are obtained each through a step of forming a film of Al or other metal on the piezoelectric substrate 8 by common semiconductor manufacturing process such as evaporation, and a step of patterning by photolithography process.

In this SAW delay line, when a voltage is applied to between terminals 45, 46 connected to the comb-type electrodes 9a, 9b forming the input-side comb-type electrode pair 9, a surface acoustic wave (SAW) is excited on the propagation path 11. In many cases, the length of this propagation path 11 is on the order of several mm to 1 cm or so at most. Nevertheless, a signal formed of a surface acoustic wave, which is slow in propagation velocity as compared with electric signals, propagates through the propagation path 11 in several hundreds of nanoseconds to several microseconds to reach the output-side comb-type electrode pair 10. The surface acoustic wave that has reached this output-side comb-type electrode pair 10 is converted into an electric signal, and taken out as a voltage difference between the terminals 47, 48 connected to the electrodes 10a, 10b of the output-side comb-type electrode pair 10.

Also, the phase amplitude adjustment parts 6, 7 are implemented each by a circuit that performs fine adjustment of phase and amplitude of an electric signal. Fine adjustment of the amplitude of an electric signal can easily be fulfilled by using an amplifier or attenuator of known techniques, and so can fine adjustment of its phase be done also by using a delay line or phase shifter of known techniques. It is noted that these phase amplitude adjustment parts 6, 7 do not necessarily need to be provided in a total number of two as shown in Fig. 1. It is also allowable to provide only either one of the phase amplitude adjustment part 6 or 7 only if two electric signals to be combined together in the power combining part 4 can be made equal in phase and amplitude to each other. It is yet also allowable, for example, to distribute the function between adjustment parts 6 and 7 so that the adjustment part 6 has only the amplitude adjustment function while the adjustment part 7 has only the phase adjustment function.

In this phase noise elimination circuit, a high-frequency signal inputted to the power distribution part 3 from the input port 1 is branched into two high-frequency signals. One high-frequency signal is inputted to the acoustic wave delay part 5, while the other high-frequency signal is inputted to the phase amplitude adjustment part 7. The high-frequency signal inputted to the acoustic wave delay part 5 is delayed by a delay time T, inputted to the phase amplitude adjustment part 6, and thereafter inputted to the power combining part 4. To this power combining part 4, two high-frequency signals derived from the phase amplitude adjustment parts 6 and 7 are inputted and combined together, and then outputted to the output port 2.

The phase noise elimination effect in the phase noise elimination circuit of this first embodiment can be expressed in the form of equations as follows. It is assumed that the frequency of an original signal (carrier signal) other than noise is fc and that the frequency offset (shifted) from this frequency fc by a frequency df is fn = fc ± df. For simplicity's sake, it is assumed that two high-frequency signals outputted from the power distribution part 3 are equal in phase and amplitude to each other. In this case, while the signal propagates from an entrance (point A) to an exit (point B) of the acoustic wave delay part 5 in Fig. 1, a signal component of the frequency fc, which is the carrier signal, undergoes Nc times of phase rotation according to the following Equation (1) during the delay time T:

$$Nc = T \div (1/fc) = T \times fc \qquad (1)$$

Meanwhile, the signal component of the frequency fn, which is noise, undergoes Nn times of phase rotation according to the following Equation (2):

$$Nn = T \div (1/fn) = T \div (1/(fc+df)) = T \times (fc+df) \qquad (2)$$

Accordingly, a difference Nd in phase rotation between the carrier signal and the noise signal at the exit of the acoustic wave delay part 5 becomes as shown by the following Equation (3):

$$N_D = Nn - Nc = (T \cdot fc + T \cdot df) - T \cdot fc = T \cdot df \qquad (3)$$

In this connection, this frequency offset df is several Hz to several MHz, whereas the delay time T is on the order of $\mu$ seconds. With this fact taken into consideration, for example, if df = 0.1 MHz and T = 5 $\mu$s, then $N_D = 5 \times 10^{-6} \times 0.1 \times 10^6 = 0.5$ (times). That is, the phase difference between the carrier signal and the noise signal is 180°.

Further, for example, if the delay time T is 50 $\mu$s and the frequency offset df is 10 kHz, then the result is $N_D = (50 \times 10^{-6}) \times (10 \times 10^3) = 0.5$. That is, the resulting phase difference between the carrier signal and the noise signal is 360° × 0.5 = 180°.

By making use of this phase difference, it becomes possible to leave only the signal component of the frequency fc, which is the carrier signal, and cancel only the signal component of the frequency fn, which is the noise, in the power combining part 4.

Accordingly, the two high-frequency signals combined together in the power combining part 4 are preparatorily adjusted by the phase amplitude adjustment parts 6 and 7 so that their signal components of the frequency fc, which is the carrier signal, become equal in phase and amplitude to each other.

As a result, in the case where the offset frequency df meets the following Equation (4), the noise signal components of the frequency fn come to have a phase shift of 180° between a noise signal component S1n of the frequency fn contained in a high-frequency signal S1 derived from the phase amplitude adjustment part 7 and a noise signal component S2n of the frequency fn contained in a high-frequency signal S2 derived from the phase amplitude adjustment part 6. In Equation (4), T is the delay time and n is an arbitrary natural number including zero.

$$df = (2n+1)/(2T) \qquad (4)$$

Then, these two noise signal components S1n and S2n shifted in phase by 180° from each other, when combined together in the power combining part 4, cancel each other. As a result, a high-frequency signal S3 from which the noise signal components of the frequency fn have been eliminated is outputted from the power combining part 4 to the output port 2.

As an example, given that an acoustic wave delay line for semi-microwave band adopted and that an acoustic wave delay line whose delay time T is 50 μs is adopted as an acoustic wave delay line that forms the acoustic wave delay part 5, substituting $T = 50 \times 10^{-6}$, where n = 0, into Equation (4) yields that

$$df = 1/(2 \times 50 \times 10^{-6}) = 10^4 = 10 \times 10^3.$$

Consequently, according to the phase noise elimination circuit of this embodiment, it becomes achievable to eliminate noise in an ultra-neighborhood of only a 10 kHz offset against the frequency fc of carrier signals of the semi-microwave band (1 to 3 GHz).

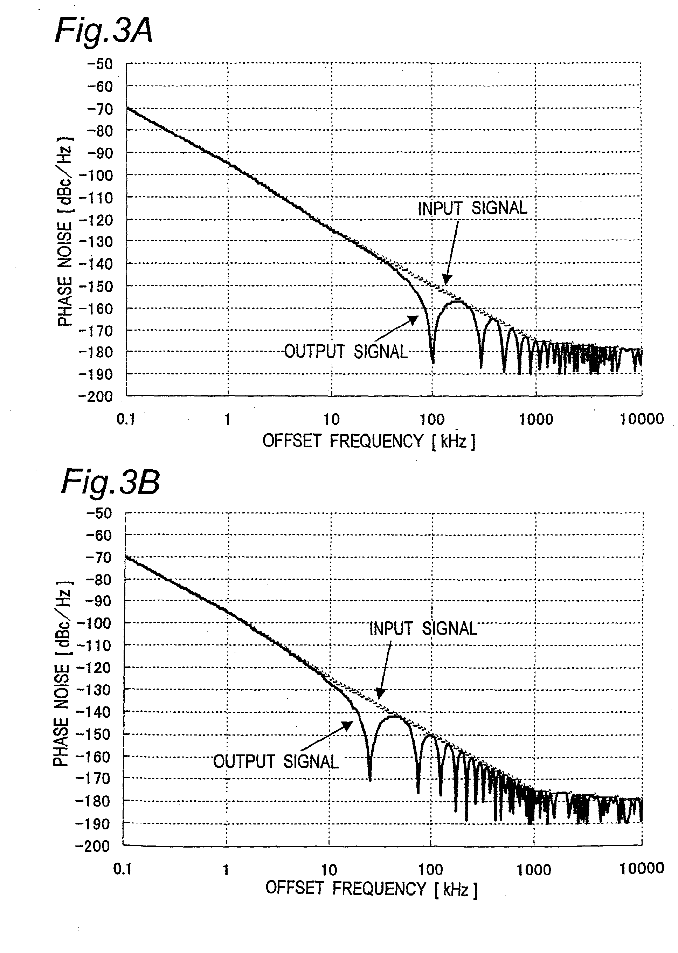

Figs. 3A and 3B show characteristics obtained by verifying phase noise reduction effects through calculations performed by a commercially available nonlinear circuit simulator (Serenade 8.5 made by Ansoft) on the phase noise elimination circuit of the first embodiment shown in Fig. 1. For these characteristics, the carrier frequency fc was set to 850 MHz and practical numerical values were given as phase noise values beforehand for modeling.

The delay time T of the acoustic wave delay part 5 was set to 5 μs in Fig. 3A, while the delay time T of the acoustic wave delay part 5 was set to 20 μs in Fig. 3B. It can be understood that phase noise that had been contained in an input signal Sin from the input port 1 was canceled in an output signal Sout from the output port 2 in specific offset frequencies, respectively.

That is, in the case where the delay time T = 5 μs as shown in Fig. 3A, it was able to be verified that phase noise (df = 100 kHz) offset by 100 kHz from the carrier frequency fc (850 MHz) can be eliminated from the input signal. Also, in the case where the delay time T = 20 μs as shown in Fig. 3B, it was able to be verified that phase noise (df = 25 kHz) offset by 25 kHz from the carrier frequency fc (850 MHz) can be eliminated from the input signal.

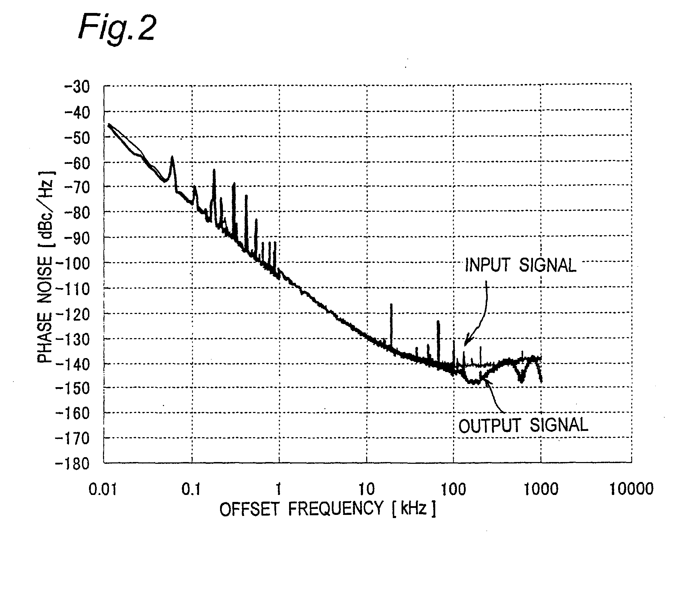

Next, Fig. 2 shows characteristics obtained by actually verifying phase noise elimination effects through a measuring experiment on the phase noise elimination circuit of the first embodiment shown in Fig.

1. For this measuring experiment, the acoustic wave delay part 5 was implemented by a SAW delay line having a delay time T of 2.5 μs, a center frequency of 850 MHz, a bandwidth of 200 MHz and an insertion loss of about 25 dB.

In this proof-of-principle experiment for the first embodiment, a SAW delay line having a relatively short delay time T of 2.5 μs was used. Also, in this experiment, the frequency of the carrier signal was set to 922 MHz, and a semi-microwave band signal generator was used as a signal source for inputting a high-frequency signal to the input port 1. Further, the phase amplitude adjustment part 6 was made up of an amplifier having a gain of about 25 dB, a coaxial attenuator, coaxial phaser parts, and a coaxial cable. The phase amplitude adjustment part 7 was made up of a coaxial attenuator, a coaxial phaser part, and a coaxial cable. Also, the power distribution part 3 and the power combining part 4 were implemented by coaxial power dividers. For the measurement of phase noise, a commercially available phase noise analyzer (NTS-1000B made by RDL) was used.

From the experiment results shown in Fig. 2, it can be confirmed that, as described above, phase noise at periodical offset frequencies such as phase noise of an offset frequency df = 1/(2 × 2.5 μs) = 200 kHz derived from Equation (4) was canceled. It is noted that the cancellation quantity of phase noise in this case was 8 dB or so, slightly smaller as compared with the above-mentioned characteristics of Fig. 3. This is because the above proof experiment was a measuring experiment with a simple circuit construction in which commercially available component parts were combined together, making it impossible to achieve enough coincidence between phase and amplitude of the carrier signal of the high-frequency signal S1 outputted by the phase amplitude adjustment part 7 and phase and amplitude of the carrier signal of the high-frequency signal S2 outputted by the phase amplitude adjustment part 6. Conversely, if enough fine adjustment of phase and amplitude is done, it becomes possible to achieve cancel quantities as large as 20 dB or more of phase noise as in the foregoing simulation results shown in Fig. 3.

In addition, by the state of the art, the center frequency on which the SAW delay line operates is limited to that of about 1 GHz at most, and SAW delay lines that operate on center frequencies of millimeter wave band have not yet be realized.

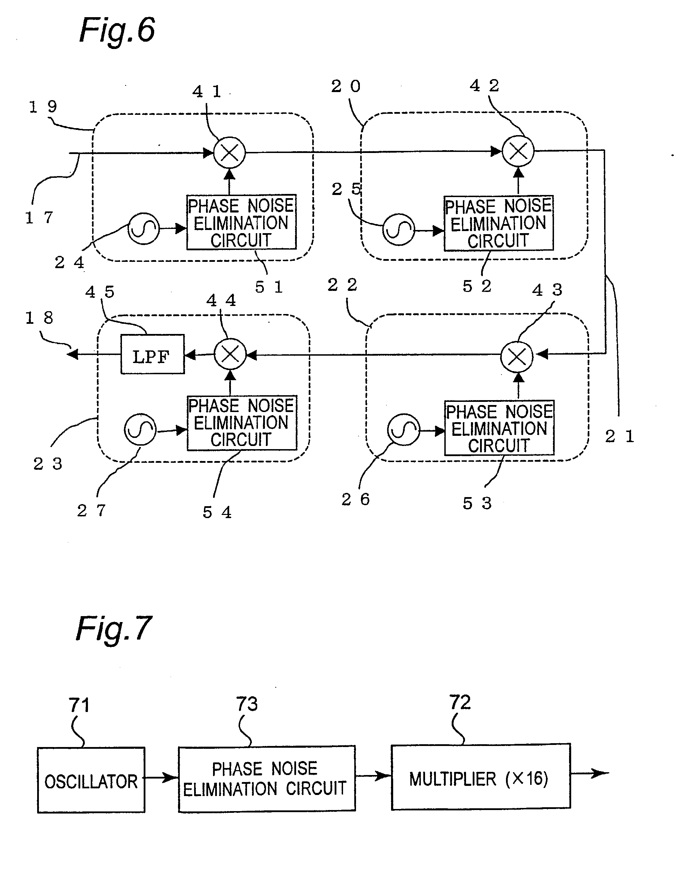

Accordingly, in the case where the phase noise elimination circuit of the first embodiment of the invention is applied to a high-frequency communication system that operates with carrier signals of superhigh frequency band such as millimeter wave band, it is appropriate that a system equipped with an oscillator 71 having an oscillating frequency of 1 GHz or lower and a frequency multiplier 72 is adopted, where a phase noise elimination circuit 73 of the above-described embodiment is connected between the oscillator 71 and the frequency multiplier 72, as shown in Fig. 7. In this case, an output signal of 1 GHz or lower outputted by the oscillator 71 is subjected to noise elimination by the phase noise elimination circuit 73, and the signal from which noise has been eliminated is multiplied to a frequency of the millimeter wave band by the frequency multiplier 72. With such a system construction, the center frequency of the SAW delay line does not necessarily need to be a high frequency over 1 GHz.

Also, in this high-frequency communication system, the bandwidth of the SAW delay line does not matter in performing the phase noise elimination for a sine-wave output of the oscillator 71. Moreover, the insertion loss of the SAW delay line is quite large in general, being about 20 to 40 dB in many cases. Whereas the smaller insertion loss of the SAW delay line is preferable, insertion losses of particularly 25 dB or lower can be compensated only by adding one stage of amplifier in many cases, thus advantageous for downsizing of the whole high-frequency communication system.

By contrast, for SAW delay lines, the most important parameter is the delay time T. In the state-of-the-art digital communications, it is often the case that phase noise in the vicinity of a frequency offset by 10 Hz to 100 kHz is of importance. From the foregoing calculational equation (4), it can be understood that a delay time T of 5 μs to 50 ms is needed to eliminate the phase noise of such offset frequencies.

(Second Embodiment)

Next, Fig. 5 shows an example of a phase noise elimination apparatus which is a second embodiment of the invention. In this phase noise elimination apparatus, the phase noise elimination circuit of the foregoing embodiment is connected in multiple stages, allowing an even greater phase noise elimination effect to be realized.

In this second embodiment, as shown in Fig. 5, two phase noise elimination circuits 13, 14 of the foregoing first embodiment are connected together in multiple stages in order to obtain a phase noise elimination effect far beyond the limit of the prior art technique.

In this second embodiment, first of all, it is assumed that a PLL type oscillator 12 itself has already been lowered in phase noise by a PLL circuit. The phase noise elimination circuit 13 included in this second embodiment can be used in cascade connection (series connection) without obstructing the operation of the oscillator 12 formed of a PLL circuit at all. Since the first embodiment, which is a phase noise elimination circuit according to the present invention, is a transmission type circuit, it is possible to use the phase noise elimination circuit 14 in cascade connection to the phase noise elimination circuit 13. Also, although not shown, similar phase noise elimination circuits may also be used in further cascade connection.

If a delay time T1 of the first-stage phase noise elimination circuit 13 and a delay time T2 of the second-stage phase noise elimination circuit 14 in this second embodiment are set to an equal delay time T, then a doubled phase noise elimination effect can be obtained at the above-mentioned offset frequency df = (2n+1)/(2T) corresponding to the delay time T, as compared with the case where the first-stage phase noise elimination circuit 13 alone is provided. Further, if the delay times T1 and T2 of the individual stages are set to different values, then a phase noise elimination effect can be obtained over a wider range of offset frequencies.

It has been impossible to achieve such effects of the second embodiment by the prior art (PLL circuit) shown in Fig. 8. A PLL circuit is a 1-port circuit integrated with an oscillator, and could not be applied into multiple stages as it is. By contrast, the phase noise elimination circuit of the first embodiment according to the present invention is a 2-port transmission-type circuit, thus allowing itself to be applied to multiple stages as in this second embodiment.

(Third Embodiment)

Next, Fig. 6 shows a phase modulated signal communication system which is a third embodiment of the invention.

This communication system has a modulation part 19 and an up-convert part 20 which are cascade-connected to an input port 17 for a baseband digital signal. These modulation part 19 and up-convert part 20 constitute a transmitting system. The up-convert part 20 of this transmitting system leads to a down-convert part 22 of a receiver system via a communication path 21. This down-convert part 22 is connected to a demodulation part 23, and this demodulation part 23 leads to an output port 18.

The modulation part 19 is composed of a modulation-use oscillator 24, a mixer 41, and a phase noise elimination circuit 51 connected between the modulation-use oscillator 24 and the mixer 41. Also, the up-convert part 20 is composed of a frequency-conversion use local oscillator 25, a mixer 42, and a phase noise elimination circuit 52 connected between the oscillator 25 and the mixer 42.

Also, the down-convert part 22 is composed of a frequency-conversion use local oscillator 26, a mixer 43, and a phase noise elimination circuit 53 connected between the oscillator 26 and the mixer 43. The demodulation part 23 is composed of a demodulation-use oscillator 27, a mixer 44, a low-pass filter 45, and a phase noise elimination circuit 54 connected between the oscillator 27 and the mixer 44. The phase noise elimination circuits 51, 52, 53, 54 are implemented each by the phase noise elimination circuit of the foregoing first embodiment.

In this block construction of the communication system in the third embodiment, the oscillators 24 to 27, the mixers 41 to 44 and the low-pass filter 45 are the same as the oscillators 124 to 127, mixers 141 to 144, and the low-pass filter 145, respectively, in the prior art of Fig. 10, and so their description is omitted.

As shown in Fig. 6, in this phase modulated signal communication system of the third embodiment, the phase noise elimination circuits 51, 52, 53, 54 are connected for the four oscillators 24 to 27 (i.e., all of the modulation-use oscillator 24, the demodulation-use oscillator 27, the frequency-conversion use local oscillators 25 and 26), respectively. These phase noise elimination circuits 51, 52, 53, 54 are capable of performing the phase noise elimination in an additional mode regardless of the internal structure of the oscillators 24 to 27 as described above.

In particular, the local oscillators 25 and 26, having high frequencies in general, involve larger amounts of mixing of phase noise. Therefore, the connection of the phase noise elimination circuits 52 and 53 to those local oscillators 25 and 26 allows a large extent of phase noise reduction to be achieved. Thus, in this third embodiment, phase noise to be mixed into the system as a whole can be reduced to a large extent, so that the communication quality can be improved.

According to this third embodiment, by the phase noise elimination circuits 51 to 54 that are small in scale and easy to mass produce, phase noise of the oscillators 24 to 27 can be reduced. As a result, in each of the blocks in which oscillators are used in a communication system that operate with phase modulated signals, i.e., in all of the modulation part 19, the up-convert part 20, the down-convert part 22 and the demodulation part 23, the mixing of phase noise from the oscillators can be reduced and, therefore, the communication quality can be improved.

In this connection, these phase noise reduction circuits 51 to 54 do not obstruct the operation of other phase noise reduction circuits, such as PLL circuits, of the prior art, but lend themselves to use in series connection in pluralities to those other phase noise reduction circuits. Thus, by their multiplier effects, the phase noise can be reduced to an extent beyond the limitations of the prior art.

In addition, although a synchronous-detection type BPSK system has been adopted in this third embodiment in contrast to the prior art example shown in Fig. 10, yet the present invention is applicable also to other systems (e.g., QPSK).

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1.  A phase noise elimination circuit comprising:

a branching part (3) for branching an inputted high-frequency signal into two high-frequency signals;
a surface-acoustic-wave delay line (5) or bulk-acoustic-wave delay line to which one high-frequency signal out of the two branched high-frequency signals is to be inputted;
a phase amplitude adjustment part (6, 7) for adjusting amplitude and phase of non-noise signal components contained in a high-frequency signal that has passed through the surface-acoustic-wave delay line (5) or bulk-acoustic-wave delay line and amplitude and phase of non-noise signal components contained in the other high-frequency signal out of the two high-frequency signals so as to make their amplitudes and phases generally coincident with each other; and
a combining part (4) for combining together two high-frequency signals outputted by the phase amplitude adjustment parts (6, 7) and containing non-noise signal components adjusted so that their amplitude and phase become generally equal to each other.

2.  A phase noise elimination apparatus having a plurality of phase noise elimination circuits as defined in Claim 1, wherein the plurality of phase noise elimination circuits are connected in a plurality of stages.

3.  The phase noise elimination apparatus according to Claim 2, wherein
the phase noise elimination circuits of the individual stages have different values of delay time (T) of the surface-acoustic-wave delay line (5) or bulk-acoustic-wave delay line.

4.  A high-frequency communication system equipped with a phase modulator or a phase demodulator, wherein
the phase noise elimination circuit (51, 54) as defined in Claim 1 is connected between a reference oscillator (24, 27) of the phase modulator or the phase demodulator (19, 23) and a modulation-and-demodulation use mixer (41, 44).

5.  A high-frequency communication system equipped with a phase modulator or a phase demodulator, wherein
the phase noise elimination apparatus as defined in Claim 2 or 3 is connected between a reference oscillator (24, 27) of the phase modulator or the phase demodulator (19, 23) and a modulation-and-demodulation use mixer (41, 44).

6.  A high-frequency communication system for mixing phase modulated signal with a local signal to fulfill frequency conversion of the phase modulated signal, wherein

the phase noise elimination circuit as defined in Claim 1 is connected between a local oscillator and a mixer.

7. A high-frequency communication system for mixing phase modulated signal with a local signal to fulfill frequency conversion of the phase modulated signal, wherein

the phase noise elimination apparatus as defined in Claim 2 or 3 is connected between a local oscillator and a mixer.

# Fig.1

*Fig.2*

## Fig.3A

## Fig.3B

*Fig.4*

*Fig.5*

| OSCILLATOR (PLL TYPE) | → | PHASE NOISE ELIMINATION CIRCUIT (DELAY TIME T1) | → | PHASE NOISE ELIMINATION CIRCUIT (DELAY TIME T2) | → |
|---|---|---|---|---|---|
| 12 | | 13 | | 14 | |

## Fig.6

## Fig.7

*Fig.8*

161
REFERENCE
OSCILLATOR
(TCXO)

162
PHASE
COMPARATOR

163

FREQUENCY
DIVIDER

164

*Fig.9*

71
OSCILLATOR
(PLL TYPE)

72
MULTIPLIER (×16)

# Fig.10

## Fig.11

## Fig.12